Europäisches Patentamt

European Patent Office

Office européen des brevets

(19)

(11) Numéro de publication : **0 122 181** ·

**B1**

(12) **FASCICULE DE BREVET EUROPÉEN**

(45) Date de publication du fascicule du brevet :
30.07.86

(51) Int. Cl.⁴ : **A 47 L 11/164, F 16 H 9/00**

(21) Numéro de dépôt : **84400528.0**

(22) Date de dépôt : **14.03.84**

(54) Machine pour la mise en état et/ou l'entretien des sols.

(30) Priorité : **17.03.83 FR 8304408**

(43) Date de publication de la demande :
**17.10.84 Bulletin 84/42**

(45) Mention de la délivrance du brevet :
**30.07.86 Bulletin 86/31**

(84) Etats contractants désignés :
**AT BE CH DE GB IT LI LU NL SE**

(56) Documents cités :
**DE-C- 583 651**
**FR-A- 2 393 562**
**US-A- 3 407 422**
**US-A- 4 186 030**

(73) Titulaire : **Plazanet, Maurice Pierre**
**34 avenue Jean Racine**
**F-92330 Sceaux (FR)**

(72) Inventeur : **Plazanet, Maurice Pierre**
**34 avenue Jean Racine**
**F-92330 Sceaux (FR)**

(74) Mandataire : **Bonnetat, Christian et al**
**Cabinet PROPI Conseils 23 rue de Léningrad**
**F-75008 Paris (FR)**

Jouve, 18, rue St-Denis, 75001 Paris, France

## Description

La présente invention concerne une machine pour la mise en état et/ou l'entretien des sols.

On connaît déjà des machines de ce type comportant un châssis supportant un moteur qui entraîne en rotation au moins un outil rotatif, tel qu'une brosse, un disque abrasif, etc., au moins un mancheron étant prévu pour déplacer et/ou contrôler le déplacement desdites machines notamment du US-A-4 186 030.

Dans des machines connues de ce type, il est fréquent de ne prévoir qu'un seul essieu transversal au châssis disposé à une extrémité de celui-ci et pourvu d'une roue à chacune de ses extrémités, ledit moteur étant monté au moins sensiblement à l'aplomb dudit essieu, tandis que l'outil rotatif est assujetti à tourner autour d'un axe fixe orthogonal au châssis et est agencé à l'extrémité de celui-ci opposée audit essieu.

Suivant l'usage auquel elles sont destinées, ces machines sont prévues pour faire tourner ledit outil rotatif plus ou moins vite et pour exercer sur cet outil, par l'intermédiaire de leur poids, une pression plus ou moins grande. Par exemple, une machine destinée au décrassage des sols doit être lourde, pour que l'outil exerce une pression importante sur le sol, mais la vitesse de rotation dudit outil doit être faible, de l'ordre de 200 tours/mn, par exemple. En revanche, une machine destinée au lustrage des sols doit être légère, pour que l'outil n'exerce qu'une faible pression sur le sol et la vitesse de rotation de cet outil doit être grande, par exemple de l'ordre de 1 000 tours/mn. Enfin, une machine destinée à un simple nettoyage doit pouvoir exercer une pression moyenne sur le sol par l'intermédiaire de son outil rotatif et celui-ci doit tourner à une vitesse intermédiaire, par exemple de l'ordre de 450 tours/mn.

Ainsi, ce genre de machine présente l'inconvénient d'être spécialisée dans le travail auquel elle est destinée, de sorte que l'utilisateur doit avoir à sa disposition autant de machines qu'il a de travaux différents à effectuer. Il serait relativement facile de prévoir une boîte de vitesses ou un variateur de vitesses pour permettre de faire varier la vitesse de rotation de l'outil d'une telle machine. Cependant, outre les inconvénients propres à ce genre de mécanismes (obligation d'utiliser de l'huile pour les boîtes de vitesses et donc risque de taches sur les sols à nettoyer, perte de puissance pour les variateurs), le problème ne serait pas résolu pour autant, puisque la pression exercée par la machine sur le sol, par l'intermédiaire de l'outil, serait constante et non pas adaptée à chaque type de travaux.

La présente invention a pour objet de remédier à ces inconvénients. Elle concerne une machine du type mentionné ci-dessus pouvant être instantanément adaptée, en ce qui concerne la vitesse de rotation et la pression exercée par son outil rotatif, au type de travail que l'on désire effectuer.

A cette fin, selon l'invention, la machine pour la mise en état et/ou l'entretien des sols comportant un châssis supportant un moteur qui, par l'intermédiaire d'un système de transmission, entraîne en rotation au moins un outil rotatif, tel qu'une brosse ou un disque, autour d'un axe orthogonal audit châssis, ledit châssis étant monté sur deux roues tournant autour d'un axe transversal audit châssis et disposé à une extrémité de celui-ci et ledit outil rotatif étant agencé à l'extrémité du châssis opposée audit axe transversal des roues est remarquable en ce que ledit moteur est susceptible d'être monté de façon amovible en plusieurs positions interchangeables réparties longitudinalement le long dudit châssis et en ce que ledit système de transmission comporte, en chacune desdites positions, des moyens de couplage pour l'axe dudit moteur, ledit système de transmission étant prévu pour que, la vitesse du moteur étant constante, la vitesse de rotation de l'outil soit d'autant plus faible que le moteur est en une position plus proche de l'extrémité du châssis opposée audit axe des roues.

Ainsi, grâce d'une part, audit système de transmission et d'autre part, au choix de la position du moteur, on fait varier simultanément la vitesse de rotation de l'outil et la pression exercée par celui-ci sur le sol, ces variations étant coordonnées pour que cette vitesse de rotation soit d'autant plus grande que la pression exercée est plus faible et vice versa.

Dans le cas où, de façon usuelle, l'axe de l'arbre du moteur est orthogonal au châssis, il est avantageux que ledit système de transmission comporte une pluralité d'arbres d'axe orthogonal audit châssis, qu'au moins certains desdits arbres soient accessibles auxdites positions interchangeables et que des moyens de couplage rapide soient prévus pour coupler l'arbre du moteur auxdits arbres accessibles du système de transmission. Ces moyens de couplage rapide peuvent être du type à emboîtement en bout, de sorte que le couplage et le découplage du moteur et du système de transmission, aux différentes positions interchangeables, peuvent se faire par simples abaissements et levages du moteur.

Dans un mode de réalisation avantageux à cet effet, ledit moteur est monté coulissant sur un système de rails lié audit châssis, et ledit système de rails peut être levé et abaissé orthogonalement par rapport au châssis.

Par exemple, la commande du système de rails est réalisée par un levier articulé sur le châssis.

Lorsque, comme cela est usuel, la machine comporte un mancheron pour déplacer et/ou contrôler les déplacements de ladite machine, il est avantageux que ce mancheron fasse office d'un tel levier. Dans ce cas, ledit mancheron est monté rotatif par rapport au châssis, et le levage et l'abaissement dudit système de rails sont commandés par la rotation dudit mancheron.

Par ailleurs, pour éviter une absorption d'énergie trop importante par le système de transmission et éviter que certains arbres de celui-ci ne tournent trop vite pour certaines positions du moteur (ce qui engendrerait des bruits et une usure importants), il est avantageux que, pour chacune de ses positions, le moteur n'entraîne que la partie du système de transmission nécessaire à la rotation de l'outil. Pour ce faire, le système de transmission comporte des crabots effaçables ; et lesdits crabots sont effacés par l'arbre dudit moteur, lorsque celui-ci est mis en place dans la position correspondante, de sorte que certaines parties du système de transmission, non directement utiles pour l'entraînement de l'outil, peuvent être désaccouplées du moteur, lorsque celui-ci occupe certaines de ses positions.

Les figures du dessin annexé feront bien comprendre comment l'invention peut être réalisée.

La figure 1 est une vue en perspective schématique d'une machine conforme à l'invention.

La figure 2 est une coupe agrandie, schématique et partielle, passant par l'axe longitudinal de la machine de la figure 1, montrant le système de rails pour le moteur, à l'exclusion du système de transmission qui a été supprimé à des fins de clarté.

La figure 3 est une coupe selon la ligne III-III de la figure 2.

La figure 4, qui correspond à la ligne de coupe IV-IV de la figure 2, illustre le montage du moteur dans le système de rails et la commande de celui-ci.

La figure 5 est une coupe agrandie, schématique et partielle, passant par l'axe longitudinal de la machine de la figure 1, montrant le système de transmission, à l'exclusion du système de rails qui a été supprimé à des fins de clarté.

Sur ces figures des références identiques désignent des éléments semblables.

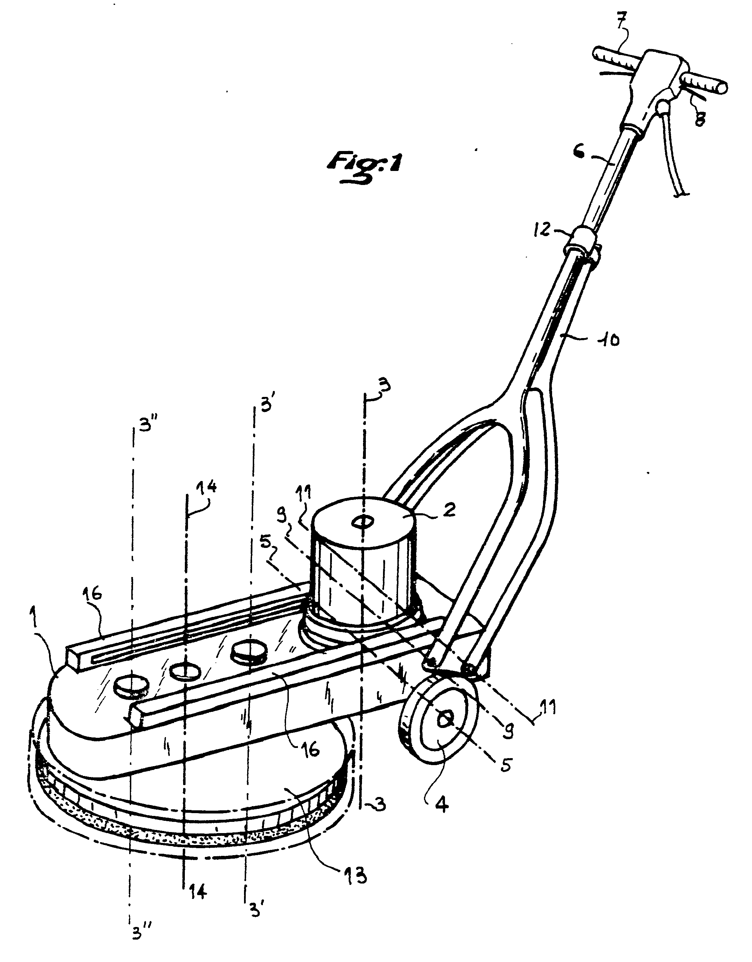

La machine selon l'invention, montrée par la figure 1, comporte un châssis 1 sur lequel est monté un moteur électrique 2 dont l'axe 3-3 est orthogonal audit châssis. Deux roues 4 sont disposées de part et d'autre du châssis 1, à une extrémité de celui-ci et définissent un axe 5-5.

Par ailleurs, un mancheron 6 équipé d'une poignée 7 et d'organes de manœuvre 8 est articulé au châssis 1, autour d'un axe 9-9, du côté de celui-ci où sont disposées les roues 4.

Une fourche 10 est articulée au châssis 1 autour d'un axe 11-11 parallèle à l'axe 9-9 et est solidaire d'une bague 12 pouvant coulisser sur le mancheron 6 et être fixée en position sur celui-ci au moyen d'un organe (non représenté), tel qu'une vis de pression.

A l'extrémité du châssis 1, opposée aux roues 4 et au mancheron 6, la machine comporte un outil 13 rotatif autour d'un axe vertical 14-14, tel qu'une brosse ou un disque abrasif, éventuellement partiellement ou totalement enveloppé par un capot de protection.

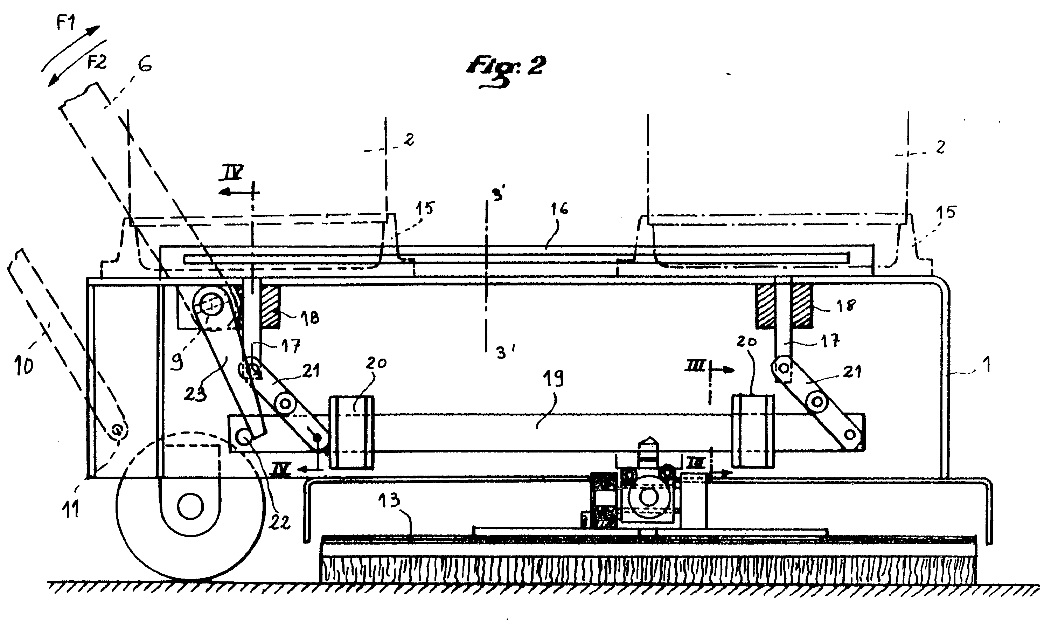

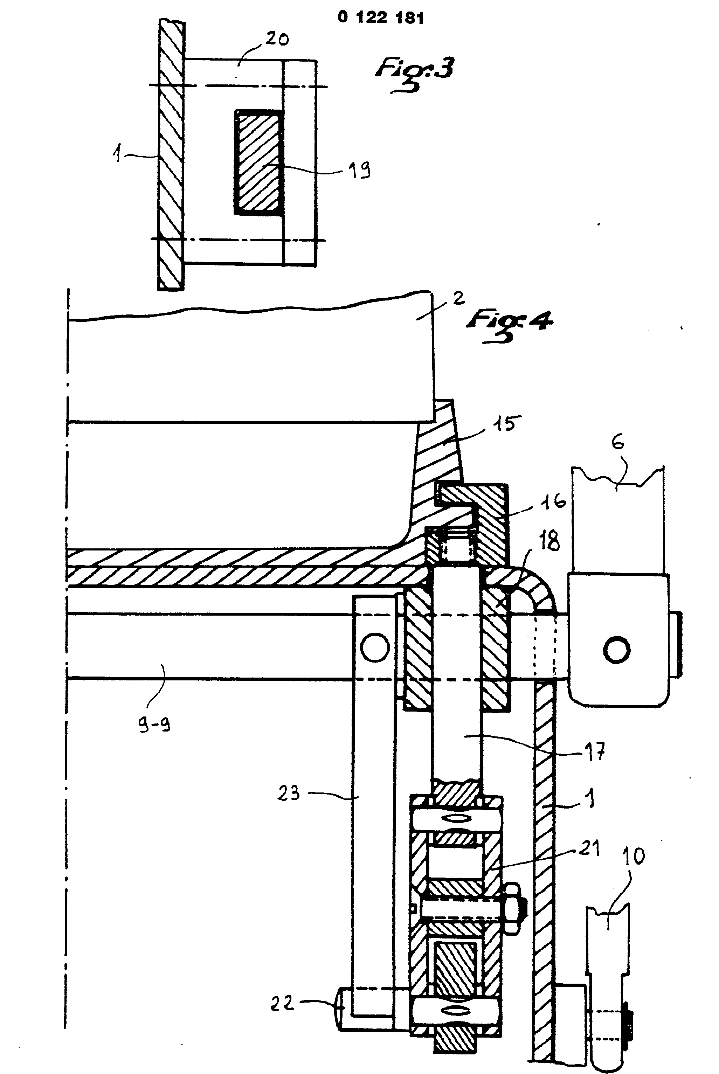

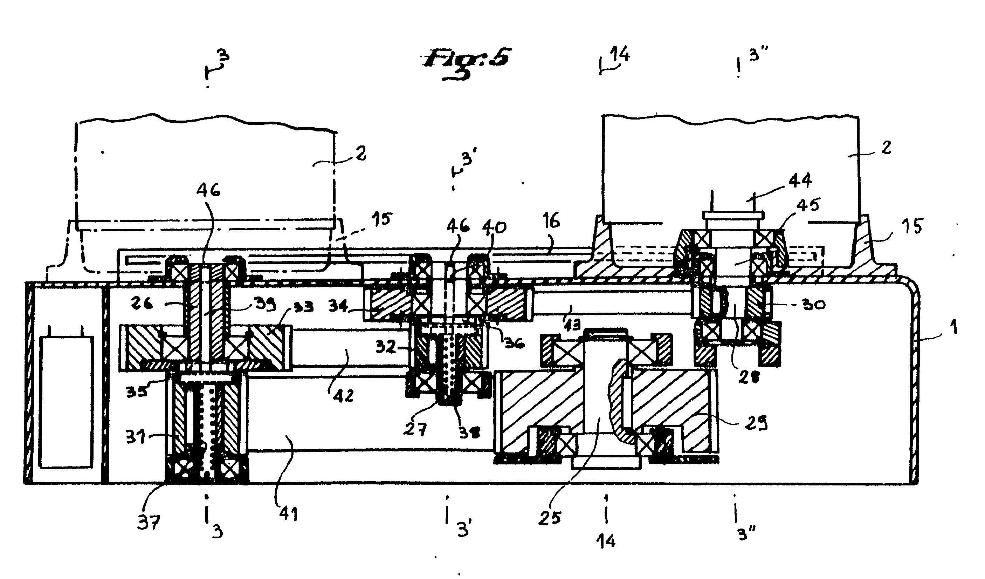

A sa partie inférieure, le moteur 2 est solidaire d'une bride 15, prisonnière en coulissement (voir notamment la figure 4) de deux rails 16 parallèles l'un à l'autre et s'étendant longitudinalement sur le châssis 1.

Grâce à ce système de rails 16, comme on le verra après, le moteur 2 peut occuper plusieurs positions le long du châssis 1, à savoir la position représentée en trait plein sur la figure 1 pour laquelle l'axe 3-3 est proche de l'axe 5-5 des roues 4 et des positions qui s'éloignent de plus en plus du mancheron 6 pour lesquelles l'axe 3-3 du moteur 2 vient prendre des positions 3'-3' et 3"-3".

A cet effet, les rails 16 sont solidaires de goujons 17 traversant le châssis 1 et pouvant coulisser verticalement dans des paliers 18. Ils sont commandés par des tringles 19 pouvant coulisser longitudinalement par rapport à des guides 20, par l'intermédiaire de biellettes 21. Sur les tringles 19 sont prévus des ergots 22 en prise avec des cames 23, calées sur l'axe 9-9 du mancheron 6.

Ainsi, lorsque la vis de pression bloquant la position de la bague 12 sur le mancheron 6 est desserrée, celui-ci peut être relevé (flèche F1 de la figure 2), ladite bague coulissant sur ledit mancheron. Ce mouvement de relevage dudit mancheron 6 entraîne, grâce à la coopération des organes 23-22-19-20-21-17 et 18, le levage des rails 16 au-dessus du châssis 1.

Dans cette position levée des rails 16, comme on le verra ci-après, le moteur 2 est désaccouplé de l'outil 13 et il peut être coulissé le long desdits rails 16 (sa bride 15 restant prisonnière de ceux-ci) pour que son axe puisse venir prendre l'une quelconque des positions 3-3, 3'-3' ou 3"-3".

Lorsque l'axe du moteur 2 est dans la position choisie, on abaisse alors le mancheron 6 (flèche F2 sur la figure 2) et les rails 16 reviennent en appui sur le châssis 1, tandis que le moteur 2 est de nouveau accouplé à l'outil 13. On serre alors la vis de pression de la bague 12 de sorte que le mancheron 6 est fixé en position angulaire par la fourche 10.

Comme le montre la figure 5, le système de transmission entre le moteur 2 et l'outil 13 comporte quatre arbres tourillonnés par rapport au châssis 1, à savoir l'arbre 25 d'axe 14-14 auquel est fixé l'outil 13 (non représenté sur la figure 5), l'arbre 26 d'axe 3-3, l'arbre 27 d'axe 3'-3' et l'arbre 28 d'axe 3"-3".

Sur chacun des arbres 25 et 28 n'est clavetée qu'une seule poulie, portant respectivement la référence 29 ou 30. En revanche, sur chacun des arbres 26 et 27 sont prévues deux poulies, à savoir une poulie clavetée 31 ou 32 respectivement et une poulie crabotée 33 ou 34 respectivement. Les crabots 35 et 36 sont chargés respectivement par des ressorts 37 et 38, vers leur position de crabotage.

Cependant, ces crabots peuvent être commandés au décrabotage par l'action de tiges 39 et 40, lorsque celles-ci sont repoussées à l'encontre de l'action desdits ressorts 37 et 38.

Des courroies 41, 42 et 43, par exemple de type cranté, relient respectivement la poulie 29 de l'arbre 25 et la poulie clavetée 31 de l'arbre 26, la poulie crabotée 33 de l'arbre 26 et la poulie clavetée 32 de l'arbre 27 et la poulie 30 de l'arbre 28 et la poulie crabotée 34 de l'arbre 27.

De plus, l'extrémité de l'arbre 44 du moteur 2 est conformée en lame de tournevis 45, alors que l'extrémité, accessible à travers le châssis 1, des arbres 26, 27 et 28 est conformée en fente complémentaire 46.

Par suite, l'accouplement de l'arbre du moteur 2 se fait par emboîtement direct de l'extrémité 45 dans lesdites fentes 46 des arbres 26, 27 et 28.

Lorsque le moteur 2 est dans la position pour laquelle son axe est en position 3"-3", l'arbre de moteur 2 entraîne l'arbre 25 de l'outil 13 grâce à l'intégralité de la chaîne 28-30-43-34-27-32-42-33-26-31-41 et 29. En revanche, lorsque l'axe de l'arbre du moteur 2 est en position 3'-3', le crabot 36 est dans sa position de désaccouplement (puisque l'extrémité 45 repousse la tige 40) de sorte que la poulie 34 n'est pas entraînée. Il en est donc de même de la courroie 43 et de la poulie 30. En revanche, la poulie 32 clavetée sur l'axe 27 est entraînée, de sorte que l'outil 13 est alors mis en rotation par la partie de chaîne 27-32-42-33-26-31-41-29 et 25. Enfin, lorsque l'axe de l'arbre du moteur 2 est en position 3-3, le crabot 35 est dans sa position de désaccouplement (puisque l'extrémité 45 repousse la tige 39) de sorte que la poulie 33 n'est pas entraînée. Il en est donc de même de la courroie 42, des poulies 32 et 34, de l'axe 27, de la courroie 43 et de la poulie 30. En revanche, la poulie clavetée 31 est entraînée, de sorte que l'outil 13 est mis en rotation par la partie de chaîne 26-31-41-29 et 25.

On comprendra aisément qu'avec le système de transmission montré par la figure 5, il est possible de faire en sorte que, la vitesse du moteur 2 étant constante la vitesse de rotation de l'outil 13 puisse être d'autant plus faible que le moteur est en une position plus proche de l'extrémité du châssis opposée à l'axe 5-5 des roues 4.

Il suffit pour cela de choisir de façon appropriée le diamètre des poulies 29 à 34.

Afin d'éviter des vibrations et les bruits correspondant, ainsi que pour éviter un désaccouplement inopportun du moteur 2 par rapport au châssis 1, il peut être avantageux de prévoir des moyens élastiques (non représentés), prenant par exemple appui sur les tringles 19, pour exercer une action tendant à appliquer ledit moteur sur ledit châssis.

## Revendications

1. Machine pour la mise en état et/ou l'entretien des sols comportant un châssis (1) supportant un moteur (2) qui, par l'intermédiaire d'un système de transmission, entraîne en rotation au moins un outil rotatif (13), tel qu'une brosse ou un disque, autour d'un axe (14-14) orthogonal audit châssis, ledit châssis étant monté sur deux roues (4) tournant .autour d'un axe (5-5) transversal audit châssis et disposé à une extrémité de celui-ci et ledit outil rotatif étant agencé à l'extrémité du châssis opposée audit axe transversal des roues, caractérisée en ce que ledit moteur (2) est susceptible d'être monté de façon amovible en plusieurs positions interchangeables (3-3, 3'-3', 3"-3") réparties longitudinalement le long dudit châssis (1) et en ce que ledit système de transmission comporte, en chacune desdites positions, des moyens de couplage (45, 46) pour l'axe dudit moteur, ledit système de transmission étant prévu pour que, la vitesse du moteur (2) étant constante, la vitesse de rotation de l'outil (13) soit d'autant plus faible que le moteur est en une position plus proche de l'extrémité du châssis opposée audit axe des roues.

2. Machine selon la revendication 1, dans laquelle l'axe de l'arbre du moteur est orthogonal au châssis, caractérisée en ce que ledit système de transmission comporte une pluralité d'arbres (25 à 28) d'axe orthogonal audit châssis (1), en ce que au moins certains de ces arbres sont accessibles auxdites positions interchangeables et en ce que des moyens de couplage rapide (45, 46) sont prévus pour coupler l'arbre du moteur (44) auxdits arbres accessibles (26 à 28) du système de transmission.

3. Machine selon la revendication 2, caractérisée en ce que lesdits moyens de couplage rapide (45-46) sont du type à emboîtement en bout.

4. Machine selon l'une des revendications 2 ou 3, caractérisée en ce que ledit moteur est monté coulissant sur un système de rails (16) lié audit châssis (1) et en ce que ledit système de rails peut être levé et abaissé orthogonalement par rapport au châssis (1).

5. Machine selon la revendication 4, comportant un mancheron (6) pour déplacer et/ou contrôler les déplacements de ladite machine, caractérisée en ce que ledit mancheron (6) est monté rotatif par rapport au châssis et en ce que le levage et l'abaissement dudit système de rails (16) sont commandés par la rotation dudit mancheron (6).

6. Machine selon l'une quelconque des revendications 2 à 5, caractérisée en ce que le système de transmission comporte des crabots effaçables (35, 36) et en ce que lesdits crabots sont effacés par l'arbre (44) dudit moteur, lorsque celui-ci est mis en place dans la position correspondante.

## Claims

1. Machine for the repair and/or maintenance of floors comprising a chassis (1) supporting a motor (2) which, via a transmission system, drives in rotation at least one rotating tool (13) such as a brush or a disc, about an axis (14-14) orthogonal to said chassis, said chassis being mounted on two wheels (4) rotating about an axis (5-5) transverse with respect to said chassis and disposed at one end thereof and said rotating tool being arranged at the end of the chassis opposite said transverse axis of the wheels, characterized in that said motor (2) is capable of being removably mounted in a plurality of interchangeable positions (3-3, 3'-3', 3"-3") distributed longitudinally along said chassis (1) and in that said transmission system comprises, in each of said positions, coupling means (45, 46) for the shaft of said motor, said transmission system being provided so that, the speed of the motor (2) being constant, the speed of rotation of the tool (13) is all the lower as the motor is in a position closer to the end of the chassis opposite said axis of the wheels.

2. Machine according to Claim 1, in which the axis of the shaft of the motor is orthogonal to the chassis, characterized in that said transmission system comprises a plurality of shafts (25 to 28) of axis orthogonal to said chassis (1), in that at least certain of these shafts are accessible in said interchangeable positions and in that rapid coupling means (45, 46) are provided for coupling the shaft of the motor (44) to said accessible shafts (26 to 28) of the transmission system.

3. Machine according to Claim 2, characterized in that said rapid coupling means (45-46) are of the butt fit type.

4. Machine according to one of Claims 2 or 3, characterized in that said motor is mounted to slide on a system of rails (16) connected to said chassis (1) and in that said system of rails may be raised and lowered at right angles with respect to the chassis (1).

5. Machine according to Claim 4, comprising a handle (6) for displacing and/or controlling the displacements of said machine, characterized in that said handle (6) is mounted to rotate with respect to the chassis and in that lifting and lowering of said system of rails (16) are controlled by the rotation of said handle (6).

6. Machine according to any one of Claims 2 to 5, characterized in that the transmission system comprises retractable dogs (35, 36) and in that said dogs are retracted by the shaft (44) of said motor, when the latter is positioned in the corresponding position.

**Patentansprüche**

1. Maschine zum Instandsetzen und Warten von Böden, bestehend aus einem Gestell (1), das einen Motor (2) trägt, der beispielshalber über ein Übertragungs- oder Übersetzungssystem zumindest ein drehbares Werkzeug (13) wie eine Bürste oder eine Scheibe um eine Achse (14-14) drehend antreibt, die orthogonal zum Gestell steht, das auf zwei Rädern (4) sitzt, die sich um eine transversal zum Gestell verlaufenden Achse (5-5) drehen, die an einem Ende des Gestells liegt, wobei das drehbare Werkzeug an dem Ende des Gestells angeordnet ist, das der transversalen Räderachse gegenüber liegt, dadurch gekennzeichnet, daß der Motor (2) umsetzbar an verschiedene auswechselbare Stellen (3-3, 3"-3", 3"-3") ist, die in Längsrichtung am Gestell (1) verteilt liegen, und daß das Übertragungs- oder Übersetzungssystem an jeder dieser Stellen Kupplungseinrichtungen (45, 46) für die Welle des Motors aufweist und so beschaffen ist, daß bei konstanter Motorgeschwindigkeit die Drehgeschwindigkeit des Werkzeugs (13) umso niedriger ist, wie sich der Motor an einer Stelle befindet, die dem der Räderachse gegenüberliegenden Ende des Gestells näher liegt.

2. Maschine nach Anspruch 1 mit einer Achse der Motorwelle, die orthogonal zum Gestell verläuft, dadurch gekennzeichnet, daß das Übertragungs- oder Übersetzungssystem mehrere Wellen (25 bis 28) aufweist, deren Achsen orthogonal zum Gestell (1) verlaufen, daß bestimmten dieser Wellen austauschbare Stellen zugänglich sind und daß Schnellkupplungsmittel (45, 46) vorgesehen sind, so daß die Welle (44) des Motors mit den zugänglichen Wellen (26 bis 28) des Übersetzungssystems koppelbar sind.

3. Maschine nach Anspruch 2, dadurch gekennzeichnet, daß als Schnellkupplungsmittel (45-46) endweise ineinander einsteckbare Ausführungen verwendet werden.

4. Maschine nach einem der Ansprüche 2 oder 3, dadurch gekennzeichnet, daß der Motor auf einem mit dem Gestell (1) verbundenen Schienensystem (16) gleitend angeordnet ist und daß das Schienensystem orthogonal zum Gestell (1) angehoben und abgesenkt werden kann.

5. Maschine nach Anspruch 4 mit einem Handgriff (6) zum Verschieben und zum Kontrollieren der Verschiebung der Maschine, dadurch gekennzeichnet, daß der Handgriff (6) zum Gestell drehbar angeordnet ist und daß das Anheben und Absenken des Schienensystems (16) durch die Drehung des Handgriffs (6) gesteuert wird.

6. Maschine nach einem der Ansprüche 2 bis 5, dadurch gekennzeichnet, daß das Übersetzungssystem einrückbare Klauen (35, 36) aufweist und daß die Klauen von der Welle (44) des Motors rückversetzt werden, wenn sie an die entsprechende Stelle gesetzt wird.

Fig.1

Fig. 2

0 122 181

Fig.3

Fig.4

*Fig.5*

0 122 181